# EUROPÄISCHE PATENTSCHRIFT

(11) **EP 3 475 675 B1**
(45) Veröffentlichungstag und Bekanntmachung des Hinweises auf die Patenterteilung: **30.12.2020**
(21) Anmeldenummer: 17732389.6
(22) Anmeldetag: 20.06.2017
(51) Int. Cl.: G01M 5/00, G01N 1/28, G01N 3/62

(54) **VERFAHREN ZUR MECHANISCHEN PRÜFUNG EINER EINTEILIG AUSGEBILDETEN STRUKTUR ANHAND VON ÜBER EIN 3D-DRUCKVERFAHREN ERZEUGTEN PRÜFKÖRPERN**
METHOD FOR MECHANICALLY TESTING A SINGLE PIECE STRUCTURE USING TEST PIECES CREATED BY MEANS OF 3D PRINTING
PROCEDE DE CONTROLE MECANIQUE D'UNE STRUCTURE D'UN SEUL TENANT A L'AIDE DE CORPS DE CONTROLE FABRIQUES SELON UN PROCEDE D'IMPRESSION 3D

(30) Priorität: 24.06.2016 EP 16176212
(43) Veröffentlichungstag der Anmeldung: 01.05.2019
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); DIJKSTRA, Dirk, 51519 Odenthal (DE); DEGIORGIO, Nicolas, 47807 Krefeld (DE)
(74) Vertreter: Levpat
(86) Internationale Anmeldenummer: PCT/EP2017/065071
(87) Internationale Veröffentlichungsnummer: WO 2017/220567

(56) Entgegenhaltungen:
- WO-A1-2014/066538
- CN-A- 104 515 696
- DE-A1-102014 116 127
- JP-A- S63 285 466
- US-A1- 2011 137 578

## Beschreibung

Die Erfindung betrifft ein Verfahren zur mechanischen Prüfung einer einteilig ausgebildeten Struktur, umfassend die folgenden Schritte:
a) Identifizieren eines Teilelementes in der einteilig ausgebildeten Struktur zur Erzeugung eines Prüfelementes welches einer mechanischen Prüfung unterzogen werden soll, wobei das Teilelement nur einen Abschnitt der einteilig ausgebildeten Struktur darstellt,
b) Ermittlung der räumlich-geometrischen Struktur des Teilelementes,
c) Erzeugung des Prüfelementes anhand der räumlich-geometrischen Struktur des Teilelementes zumindest anteilig oder vollständig über ein 3D-Druckverfahren,
d) Durchführung wenigstens einer mechanischen Prüfung an dem erzeugten Prüfelement.

Ein weiterer Gegenstand der vorliegenden Erfindung ist ein Verfahren zur Modifizierung der Konstruktions-Daten einer einteilig ausgebildeten Struktur, bei dem die aus dem vorgenannten Verfahren gewonnenen Daten der mechanischen Prüfung für eine Modifizierung der Konstruktions-Daten der Struktur verwendet werden.

Verfahren zur materialtechnischen Prüfung einzelner Bereiche aus einer größeren Struktur sind aus dem Stand der Technik hinlänglich bekannt. Hierzu werden die entsprechenden Bereiche, an denen besonders hohe mechanische Belastungen zu erwarten sind, mithilfe üblicher Methoden herausgetrennt, beispielsweise durch Heraussägen oder Herausschneiden. Die herausgetrennten Bereiche werden dann anschließend mechanischen Belastungstests unterzogen, die an dieser Stelle typischerweise auftretenden mechanischen Belastungen entsprechen. Auf diese Weise kann das mechanische Verhalten einer größeren Struktur untersucht werden, die beispielsweise zu groß wäre, um sie in ihrer Gesamtheit in einer Prüfmaschine zu untersuchen. Werden diese Tests an mehreren kritischen Stellen des Bauteils durchgeführt, kann anhand der Ergebnisse annäherungsweise auf die Belastbarkeit der gesamten Struktur geschlossen werden.

Bauteile werden in immer größerem Umfang am Computer entwickelt und ausgelegt. Die computerunterstützte Konstruktions- und Simulations-Software schlägt auf Basis der Funktions-Vorgaben, wie der Auslegung der auf das Bauteil wirkenden mechanischen Kräfte, Temperatur- und elektrischen Ströme, optimierte Geometrien vor. Ein Großteil dieser optimierten Geometrien wird nicht mehr durch herkömmliche Produktionsprozesse (Spritzguss, Extrusion, Verguss, Kaltverformung etc.), wie sie für die Kunststoff und Metallverarbeitung bekannt sind, effizient zu fertigen sein. In zunehmendem Maße werden additive und subtraktive Fertigungstechnologien zur Herstellung von Serienprodukten mit optimierten Bauteilgeometrien herangezogen werden.

Die Prüfung von immer komplexeren Bauteilen findet in Zukunft hauptsächlich im Computer auf Basis von Eigenschaftssimulationen statt. Schon heute sind die vorgenannten gängigen Prüfverfahren an klassischen Prüfkörpern nicht immer geeignet, um Daten für eine zuverlässige Vorhersage von erlaubten Lastzyklen und kritische Versagensparameter zu erzeugen. Aktuelle Prüfgeometrien und Prüfverfahren verlieren zunehmend ihre Relevanz für die Prüfung und Vorhersage von hochkomplexen Bauteilen. Daher müssen oftmals die gesamten Bauteile einer Prüfung unterzogen werden. Gerade für Bauteile, die lediglich in Kleinserien oder gar als Einzelstücke gefertigt werden sollen, ist aber eine zerstörerische Bauteilprüfung wirtschaftlich nicht effizient.

Geeignete Analyseverfahren zur Identifizierung möglicher Schwachstellen sind aus dem Stand der Technik bekannt. So beschreibt WO 2014/066538 ein derartiges Verfahren, bei der eine sogenannte "Weak Spot Analysis", also eine Schwachpunkt-Analyse, an dreidimensionalen Objekten vorgenommen wird. Das hier beschriebene Verfahren eignet sich auf für die Herstellung 3D-gedruckter Bauteile beziehungsweise deren voraussichtliche mechanische Belastbarkeit.

Aus US 2015/0154321 A1 ist ein Verfahren zur Herstellung von 3D-gedruckten Objekten bekannt, bei dem die Struktur des dreidimensionalen Objekts zunächst mathematisch in zweidimensionale Flächen aufgeteilt und deren mechanische Eigenschaften über eine Simulation errechnet wird. Die Ergebnisse dieser Berechnung fließen dann wiederum in die Steuerung des 3D-Druckverfahrens ein, um auf diese Weise die Stabilität der Struktur insgesamt zu verbessern.

DE102014116127 offenbarte ein Verfahren zur mechanischen Prüfung einer einteilig ausgebildeten Struktur gemäß der Präambel des Anspruchs 1.

Die aus dem Stand der Technik bekannten Verfahren sind mit verschiedenen Nachteilen behaftet. Bei den Verfahren, bei denen jeweils die gesamte Struktur mechanischen Tests unterzogen wird, kann es sich als nachteilig erweisen, dass für jeden einzelnen Test eine neue Prüfstruktur erzeugt werden muss. Zudem ergibt sich hier manchmal das Problem, dass die möglicherweise kritischen Stellen nicht optimal in eine Prüfapparatur eingespannt werden kann. Zudem können manche zu untersuchenden Strukturen auch hinsichtlich ihrer Größe problematisch für die Untersuchung in üblichen Prüfmaschinen sein. Die hierfür erforderlichen größeren Prüfmaschinen sind teuer in der Anschaffung, was den gesamten Testablauf sehr kostspielig machen kann. Insbesondere die immer komplexer konstruierten Bauteile lassen sich mit den bislang bekannten Methoden nicht mehr in wirtschaftlich vertretbarer Weise prüfen.

Bei anderen Methoden, bei denen aus der gesamten Struktur Teile herausgeschnitten werden, um diese separat zu untersuchen, stellt sich häufig das Problem, dass bereits durch das Heraustrennen mechanische Veränderungen an den Randbereichen auftreten, die das mechanische Verhalten dieses Teilsegments beeinflussen können. Zudem ist es bei diversen Prüfmaschinen erforderlich, an den zu untersuchenden Probenkörper entsprechende Anschlusselemente anzubringen, um den Probenkörper überhaupt in die Prüfmaschine einsetzen zu können. Das Anbringen dieser Halteelemente kann je nach Material problematisch sein, weil beispielsweise ein Anschweißen an den Prüfkörper lokale Gefügeveränderungen verursachen kann, die letztendlich Einfluss auf das Prüfergebnis haben könnten. Insofern können hierdurch die Messergebnisse verfälscht werden.

Eine Aufgabe der vorliegenden Erfindung ist es, wenigstens einen Teil der Nachteile des Standes der Technik wenigstens zu einem Teil zu verbessern. Eine weitere Aufgabe der vorliegenden Erfindung besteht somit darin, ein Verfahren zur mechanischen Prüfung einer einteilig ausgebildeten Struktur zur Verfügung zu stellen, welches eine schnelle und kostengünstige Untersuchung von Teilbereichen der Struktur erlaubt, an denen besondere mechanische Belastungen zu erwarten sind. Hierbei soll es sich insbesondere um bauteilversagensrelevante mechanische Belastungen handeln. Das Verfahren soll zudem vorzugsweise die Möglichkeit bieten, Teilbereiche der Struktur separat zu untersuchen und dabei die Möglichkeit eröffnen, Anschlusselemente für unterschiedliche Prüfmaschinen in einer Art und Weise anzubringen, die möglichst nicht zu einer Veränderung der mechanischen Eigenschaften des zu untersuchenden Teilabschnitts selbst bewirken. Das Verfahren soll vorzugsweise selbst bei komplex gestalteten Bauteilen noch wirtschaftlich durchführbar sein.

Die Aufgabe wird gelöst durch ein Verfahren zu mechanischen Prüfung einer einteilig ausgebildeten Struktur, umfassend die folgenden Schritte:
a) Identifizieren eines Teilelementes in der einteilig ausgebildeten Struktur zur Erzeugung eines Prüfelementes welches einer mechanischen Prüfung unterzogen werden soll, wobei das Teilelement nur einen Abschnitt der einteilig ausgebildeten Struktur darstellt,
b) Ermittlung der räumlich-geometrischen Struktur des Teilelementes,
c) Erzeugung des Prüfelementes anhand der räumlich-geometrischen Struktur des Teilelementes zumindest anteilig oder vollständig über ein 3D-Druckverfahren,
d) Durchführung wenigstens einer mechanischen Prüfung an dem erzeugten Prüfelement,
wobei das Identifizieren des Teilelementes in der einteilig ausgebildeten Struktur anhand des Ergebnisses einer Simulationsrechnung erfolgt, die ermittelt, in welchen Bereichen der einteilig ausgebildeten Struktur bei deren bestimmungsgemäßem Gebrauch mit einer überdurchschnittlichen mechanischen Belastung zu rechnen ist.

Unter einer einteilig ausgebildeten Struktur wird im Sinne der vorliegenden Erfindung ein dreidimensionaler Körper verstanden, der keine voneinander reversibel trennbaren Strukturelemente umfasst, also beispielsweise zwei miteinander durch eine Verschraubung verbundene Elemente. Sehr wohl kann die einteilig ausgebildete Struktur im Sinne der vorliegenden Erfindung aus unterschiedlichen Materialien oder Materialschichten aufgebaut sein, sofern diese Schichten nicht zerstörungsfrei voneinander getrennt werden können.

Die einteilig ausgebildete Struktur im Sinne der vorliegenden Erfindung kann natürlich selbst wiederum Bestandteil eines größeren Objektes sein. Die einteilig ausgebildete Struktur kann hierbei über alle möglichen Fügeverfahren mit den anderen Komponenten des größeren Objektes verbunden werden, und zwar sowohl über reversible als auch irreversible Verbindungstechniken, wie beispielsweise Schweißen, Kleben beziehungsweise Stecken oder Verschrauben. So kann eine einteilig ausgebildete Struktur im Sinne der vorliegenden Erfindung beispielsweise der Fersenabschnitt einer Schuhsohle sein. Diese kann dann zur Fertigstellung des größeren Objekts, also des gesamten Schuhs mit dem vorderen Abschnitt der Sohle verschweißt und mit dem Schuhoberteil verbunden werden.

Der vorliegenden Erfindung liegt die Erkenntnis zugrunde, dass mittels 3D-Druckverfahren beispielsweise versagensrelevante Bereiche der einteilig ausgebildeten Struktur einfach und kostengünstig nachgebildet und hieran mechanische Untersuchungen durchgeführt werden können. Hierbei ist es nicht einmal erforderlich, dass die einteilig ausgebildete Struktur aus demselben Material aufgebaut ist, wie das 3D-gedruckte Prüfelement. So ist es beispielsweise denkbar, dass eine Verstärkungsstruktur, wie beispielsweise die Spante eines Flugzeugs aus Aluminium in Teilbereichen über ein 3D-Druckverfahren zur Erzeugung eines entsprechenden Prüfelementes nachgebildet und dieser Bereich dann mechanischen Tests unterzogen wird. Selbst wenn Aluminium und der beim 3D-Druck verwendete Kunststoff unterschiedliche mechanische Eigenschaften haben, können in Kenntnis der grundsätzlichen mechanischen Unterschiede dennoch Rückschlüsse auf das mechanische Verhalten der Flugzeugspante in diesem Bereich gezogen werden.

Die Ergebnisse aus diesen Untersuchungen können als Daten zurück in die Auslegung der Struktur fließen, um die berechneten durch die in der Prüfung gemessenen Eigenschaften zu ergänzen um damit die Geometrieoptimierung neu durchzuführen. Dabei kann der Zyklus von Computer generiertem Design, Identifikation kritischer Bauteilbereiche, also entsprechender Teilelemente, Herstellung eines entsprechenden Prüfelementes, Prüfung des in dem gewünschten Fertigungsverfahren des Bauteilbereiches hergestellten Prüfelementes bezüglich der vorherbestimmten kritischen Versagensparameter und Datenrückführung aus der Bauteilprüfung in das Computer generierte Design der Struktur, kann bei Bedarf mehrfach durchlaufen werden und im Verlauf der Optimierung neue kritische Bereichen im Bauteil erkannt und 3D-gedruckt, geprüft und wiederum in die Optimierung zurückgeführt werden. Dabei sind auch Multimaterial-Lösungen als Ergebnis möglich.

Folglich ist ein weiterer Gegenstand der vorliegenden Erfindung ein Verfahren zur Modifizierung der Konstruktions-Daten einer einteilig ausgebildeten Struktur, bei dem
i) die einteilig ausgebildeten Struktur zunächst einem erfindungsgemäßen Verfahren zur mechanischen Prüfung unterzogen wird,
ii) die Daten der mechanischen Prüfung anschließend zur Modifizierung der Konstruktions-Daten der einteilig ausgebildeten Struktur verwendet werden und
iii) optional auf Basis der modifizierten Konstruktions-Daten eine modifizierte Struktur erzeugt wird,
wobei die Schritte i) bis iii) vorzugsweise wenigstens einmal wiederholt werden.

Bei dem erfindungsgemäßen Verfahren zur mechanischen Prüfung ist es vorgesehen, dass die Erzeugung des Prüfelementes anhand der räumlich-geometrischen Struktur des Teilelementes zumindest anteilig oder vollständig über ein 3D-Druckverfahren vollzogen werden kann. Eine anteilige Erzeugung des Prüfelementes über 3D-Druckverfahren ist insbesondere dann sinnvoll, wenn die Struktur des Teilelements ebenfalls teilweise auf herkömmliche Weise und zum Teil über 3D-Druck erzeugt worden ist. So kann beispielsweise eine 3D gedruckte Schuhkappe mit einer spritzgegossenen TPU Sohle mittels eines Klebstoffes verklebt sein. Als bauteilversagensrelevantes Teilelement könnte die Schuhkappe über 3D-Druck erzeugt, auf einen dem Teilelement entsprechenden Abschnitt der TPU Sohle in der vorgenannten Weise verklebt und beispielsweise auf Haftungsversagen im 180° Abzugstest geprüft werden.

Besonders vorteilhaft bei dem erfindungsgemäßen Verfahren zur mechanischen Prüfung kann an dem Prüfelement wenigstens ein Adapterelement vorgesehen sein, das geeignet ist, mit einer Vorrichtung zur mechanischen Prüfung gekoppelt zu werden. Dabei wird in besonders bevorzugter Weise das Adapterelement über ein 3D-Druckverfahren erzeugt. Dies ist von Vorteil, da hierdurch keine thermischen oder anderweitigen Belastungen auf das Prüfelement einwirken, die sein mechanisches Verhalten verändern könnten. In besonders bevorzugter Weise wird das Adapterelement unmittelbar in einem Arbeitsgang mit der Erzeugung des Prüfelementes selbst vorgenommen. Dies ist besonders vorteilhaft, da auf diese Weise das Prüfelement und das beziehungsweise die daran vorgesehenen Adapterelemente eine mechanische Einheit bilden, so dass die Ergebnisse der Prüfung des Prüfelements praktisch nicht durch die Adapterelemente verändert werden.

Die räumliche Ausgestaltung der Adapterelemente richtet sich im Wesentlichen nach den Anforderungen und Belastungen der Prüfmaschine. Sie sind zweckmäßigerweise so zu dimensionieren, dass sie optimal in die Anschlussmöglichkeiten der Prüfmaschine passen und sich zum anderen "inert" bei den mechanischen Tests verhalten. Hierunter wird verstanden, dass die Anschlusselemente insbesondere bei den mechanischen Tests kein Materialversagen zeigen sollen und sich beispielsweise bei Biegetests nicht merklich mitverbiegen sollen. Bei dynamischen Untersuchungen, wie beispielsweise bei der Messung des E-Moduls sollen die Anschlusselemente hier ebenfalls keinen Einfluss auf das Messergebnis ausüben. Das Adapterelement kann beispielsweise ausgewählt sein aus Fahnen, Ösen, Stiften, Laschen, Zylindern, Greifern, Haltern, Fäden, Netzen, insbesondere aus Formen die mit klassischen mechanischen Prüfmaschinen sicher und messtechnisch sinnvoll verbunden werden können.

In vorteilhafter Ausgestaltung des erfindungsgemäßen Verfahrens zur mechanischen Prüfung sind wenigstens zwei Adapterelemente vorgesehen. Dies ist in der Regel zweckmäßig, da Prüfkörper in den meisten mechanischen Prüfapparaturen an zwei Stellen eingespannt werden müssen. Hierbei können die Adapterelemente an gegenüberliegenden Enden oder auch am gleichen Ende des Prüfelementes positioniert sein, je nachdem, welche mechanischen Tests durchgeführt werden sollen und an welchen Stellen die Prüfmaschine das Vorhandensein von Einspannmöglichkeiten vorsieht.

Nach einer bevorzugten Ausführungsform des erfindungsgemäßen Verfahrens zur mechanischen Prüfung sind die Adapterelemente an den Ansatzstellen der Kraftvektoren positioniert, an denen insbesondere bauteilversagensrelevante mechanische Belastungen der einteilig ausgebildeten Struktur zu erwarten sind. Hierdurch kann gewährleistet werden, dass das Prüfelement in der Weise dem mechanischen Test unterzogen wird, in der auch bei der einteilig ausgebildeten Struktur die mechanische Belastung zu erwarten ist. Die bauteilversagensrelevante mechanische Belastung kann über unterschiedliche mathematische Simulationsberechnungen ermittelt werden, vorzugsweise über eine FEM Last- und Versagenssimulation.

Wie bereits vorstehend ausgeführt wurde, kann einteilig ausgebildete Struktur prinzipiell aus jedem erdenklichen Material aufgebaut sein. In vorteilhafter Ausgestaltung kann die Struktur zumindest anteilig über ein 3D-Druckverfahren erzeugt worden sein. Hierbei befindet sich das Teilelement vorzugsweise vollständig innerhalb desjenigen Bereiches, der über 3D-Druckverfahren erzeugt worden ist. Auf diese Weise kann speziell ein Teilbereich untersucht werden, der ebenfalls über ein 3D-Druckverfahren erzeugt worden ist. In besonders vorteilhafter Ausgestaltung dieser Ausführungsform des erfindungsgemäßen Verfahrens wird zum Drucken des Prüfelements dasselbe 3D-Druckverfahren verwendet, welches zum wenigstens anteiligen Drucken der Struktur verwendet wurde. Hierdurch kann ausgeschlossen werden, dass die Ergebnisse der mechanischen Tests an dem Prüfelement auf ein abweichendes 3D-Druckverfahren zurückzuführen sind.

Die Ermittlung der räumlich-geometrischen Struktur des Teilelements kann auf sämtlichen dem Fachmann bekannten Verfahren basieren. So kann die Ermittlung der räumlich-geometrischen Struktur des Teilelements auf Basis der Konstruktionsdaten, insbesondere der CAD-Daten erfolgen. Alternativ und insbesondere dann, wenn derartige Konstruktionsdaten nicht verfügbar sind, können die Ergebnisse einer wenigstens teilweisen Strukturanalyse herangezogen werden, wie beispielsweise mittels eines tomographischen schichtabbildenden Verfahrens, insbesondere mittels Elektronen-, Ionen- oder Röntgenanalyse, Nuclear magnetic Resonanzanalyse (NMR), Ultraschallanalyse und/ oder Teraherztechnik an der einteilig ausgebildeten Struktur.

Die im Rahmen des erfindungsgemäßen Verfahrens zur mechanischen Prüfung eingesetzten mechanischen Tests unterliegen prinzipiell keiner Beschränkung und richten sich vorzugsweise an den zu erwartenden Belastungen. So kann die mechanische Prüfung an dem Prüfelement beispielsweise ausgewählt sein aus einem Zug-, Druck-, Biege-, Scher-,Reiß- und Schwingungsresonanztest, aus einem Test zur Bestimmung des Elastizitätsmoduls, aus dynamisch mechanischen Tests zur Bestimmung der Materialermüdung, aus Wärme, Oxidations-, Alterungs- und Quellungstests auch in Kombination mit mechanischen und Ermüdungstests, insbesondere bei verschiedenen Temperaturen, oxidativen oder reduktiven Bedingungen, in Gegenwart von Säuren, Basen, organischen und anorganischen Lösungsmitteln, Schmiermitteln, Fetten, Ölen, Treibstoffen und/oder Wasser oder mehreren der vorgenannten Tests.

Erfindungsgemäß ist bei dem Verfahren zur mechanischen Prüfung vorgesehen, dass die Erzeugung des Prüfelements über einen 3D-Druckverfahren erfolgt. Das 3D-Druckverfahren kann beispielsweise ausgewählt sein aus Schmelzschichtung (Fused Filament Fabrication, FFF), Ink-Jet-Printing, Photopolymer-Jetting, Stereo Lithograhpy, Selective Laser Sintering, Digital Light Processing based additive manufacturing system, Continuous Liquid Interface Production, Selective Laser Melting, Binder Jetting based additive manufacturing, Multijet Fusion based additive manufacturing, High Speed Sintering Process und Laminated Object Modelling.

In vorteilhafter Ausgestaltung des erfindungsgemäßen Verfahrens zur mechanischen Prüfung wird bei der Erzeugung des Prüfelements dasselbe Material verwendet, wie es demjenigen des Teilelements in der einteilig ausgebildeten Struktur entspricht. Auf diese Weise können die Testergebnisse an dem Prüfelement unmittelbar auf das Teilelement der Struktur übertragen werden, ohne hierfür Korrekturrechnung aufgrund der Verwendung anderer Materialien durchführen zu müssen.

Alternativ hierzu ist es jedoch ebenfalls möglich, dass bei der Erzeugung des Prüfelements ein anderes Material verwendet wird, als es diesem Teilelement in der einteilig ausgebildeten Struktur entspricht, wobei die Ergebnisse der mechanischen Prüfung an dem Prüfelement über eine Korrekturrechnung auf dasjenige Material übertragen werden, das diesem Teilelement in der einteilig ausgebildeten Struktur entspricht. Alternativ oder zusätzlich hierzu kann das Prüfelement über eine Größenskalierung in einer anderen Größe erzeugt werden als das Teilelement in der einteilig ausgebildeten Struktur, wobei die Ergebnisse der mechanischen Prüfung an dem Prüfelement über eine Korrekturrechnung auf diejenige Größe übertragen werden, die diesem Teilelement in der einteilig ausgebildeten Struktur entspricht.

Die Identifizierung des Teilelements in der einteilig ausgebildeten Struktur kann auf verschiedene Weise erfolgen. Bei einfachen Strukturen können diese Bereiche im einfachsten Fall durch optische Begutachtung und auf Erfahrungen basierend identifiziert werden. Erfindungsgemäß ist vorgesehen, dass Identifizierungen des Teilelements in der einteilig ausgebildeten Struktur anhand des Ergebnisses einer Simulationsrechnung erfolgen, die ermittelt, in welchen Bereichen der einteilig ausgebildeten Struktur bei deren bestimmungsgemäßen Gebrauch mit einer überdurchschnittlichen mechanischen Belastung zu rechnen ist. Die hierfür üblichen Simulationsrechnungen sind dem Fachmann bekannt. Auch hier kann die bereits vorstehend erwähnte FEM-Last- und Versagenssimulation verwendet werden.

Das Material des Prüfelements kann beispielsweise ausgewählt sein aus Metallen, Kunststoffen und Kompositen, insbesondere aus flüssig verarbeitbaren Kunststoffformulierungen auf Basis von Polyacrylaten, Polyepoxiden, Polyurethanen, Polyestern, Polysilikonen, sowie deren Mischungen und Mischpolymerisate, aus thermoplastisch verarbeitbaren Kunststoffformulierungen auf Basis von Polyamiden, Polyurethanen, Polyestern, Polyimiden, Polyetherkethonen, Polycarbonaten, Polyacrylaten, Polyolefinen, Polyvinylchlorid, Polyacrylaten, Polyoxymethylen und / oder vernetzten Materialien auf Basis von Polyepoxiden, Polyurethanen, Polysilikonen, Polyacrylaten, Polyestern sowie deren Mischungen und Mischpolymerisate.

In vorteilhafter Ausgestaltung des erfindungsgemäßen Verfahrens zur mechanischen Prüfung können auch mehrere Teilelemente der einteilig ausgebildeten Struktur identifiziert, deren räumlich-geometrische Struktur jeweils ermittelt und hieraus jeweils Prüfelemente erzeugt werden, die dann jeweils wenigstens einer mechanischen Prüfung unterzogen werden. Auf diese Weise kann die einteilig ausgebildete Struktur in ihre versagensrelevanten kritischen Teilelemente "zerlegt" werden, wobei für jedes Teilelement eine passende mechanische Prüfung in der Weise ausgewählt werden kann, wie sie den Belastungen beim bestimmungsgemäßen Gebrauch der Struktur entsprechen.

Bei dem erfindungsgemäßen Verfahren zur Modifizierung der Konstruktions-Daten einer einteilig ausgebildeten Struktur ist vorgesehen, dass auf Basis der Ergebnisse der mechanischen Prüfung die Konstruktions-Daten der Struktur modifiziert werden. Diese Modifizierung kann sämtliche konstruktiven Maßnahmen betreffen, also beispielsweise Änderungen hinsichtlich der räumlichkörperlichen Ausgestaltung aber auch der verwendeten Materialien oder auch Kombinationen hiervon.

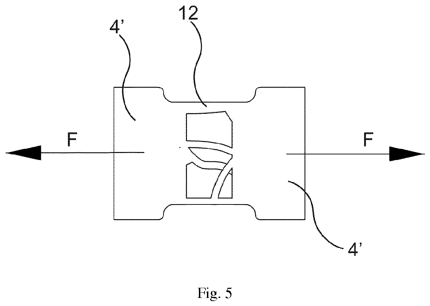

Die vorliegende Erfindung wird im Folgenden anhand der Fign. 1 bis 5 näher erläutert. Darin zeigt
- Fig. 1: eine erste einteilig ausgebildete Struktur mit bauteilversagensrelevanten Teilelement,
- Fig. 2: ein erstes Prüfelement zum Teilelement aus Fig. 1,
- Fig. 3: ein zweites Prüfelement zum Teilelement aus Fig. 1,
- Fig. 4: eine zweite einteilig ausgebildete Struktur mit bauteilversagensrelevanten Bereich sowie
- Fig. 5: ein Prüfelement aus dem bauteilversagensrelevanten Teilelement aus Fig. 4.

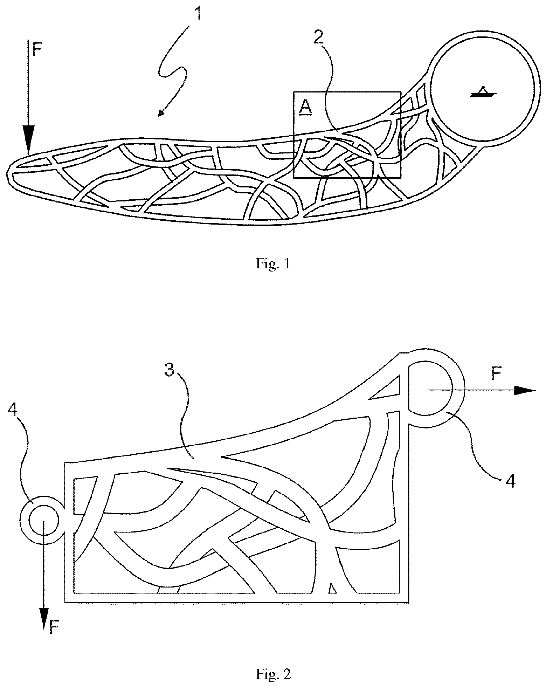

In Fig. 1 ist eine einteilig ausgebildete Struktur 1 in Form einer freitragenden Sitzfläche in seitlicher Schnittdarstellung abgebildet. Beim bestimmungsgemäßen Gebrauch der Struktur 1 tritt in einem Randbereich eine nach unten wirkende Kraft F auf. Diese kann zu einem Versagen der Struktur in einem Teilelement 2 des Bereichs A führen.

Zur Untersuchung der mechanischen Beständigkeit wird die räumlich-geometrische Struktur des Teilelementes 2 ermittelt und hieraus ein in Fig. 2 dargestelltes Prüfelement 3 über ein 3D-Druckverfahren erzeugt. An dem Prüfelement 3 sind an jeweils gegenüberliegenden Enden Adapterelemente 4 in Form von Ösen vorgesehen. Die Ösen 4 werden bei der Erzeugung des Prüfelements 3 unmittelbar mit dessen Erstellung beim 3D-Druckverfahren erzeugt, werden also nicht separat angebracht. Das Prüfelement 3 kann mithilfe der Ösen 4 in eine Prüfmaschine eingespannt und entlang der Kraftvektoren F mit Zugkräften beaufschlagt werden, um so die mechanische Belastbarkeit des Prüfelements 3 und damit des diesem entsprechenden Teilelements 2 der Struktur 1 zu ermitteln.

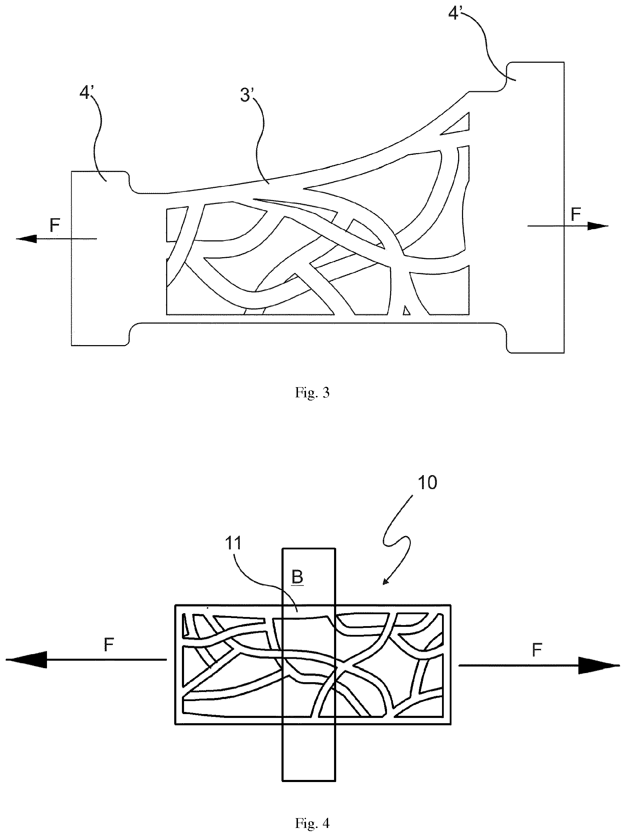

In Fig. 3 ist ein weiteres Prüfelement 3' dargestellt, welches aus dem Teilelement 2 über ein 3D-Druckverfahren erzeugt wurde. An dem Prüfelement 3' sind an gegenüberliegenden Enden Adapterelemente in Form von Laschen 4' vorgesehen, die unmittelbar mit der Erzeugung des Prüfelementes 3' über 3D-Druckverfahren erzeugt werden. An den Laschen 4' kann das Prüfelement 3' in eine Zugprüfmaschine eingespannt und mit Zugkräften entlang der Kraftvektoren F mit Zugkräften beaufschlagt werden.

In Fig. 4 ist eine weitere einteilig ausgebildete Struktur 10 abgebildet. Die Struktur 10 wird beim bestimmungsgemäßen Gebrauch in erster Linie mit in entgegengesetzten Richtungen Zugkräften F belastet. Durch eine FEM-Last- und Versagenssimulation wird im Bereich B ein Teilelement 11 ermittelt, an dem die Struktur 10 voraussichtlich am ehesten ein Bauteilversagen zeigen wird.

Anhand der Konstruktionsdaten wird aus dem Teilelement 11 dessen räumlich-geometrische Struktur ermittelt und hieraus ein Prüfelement 12 über ein 3D-Druckverfahren erzeugt. An dem Prüfelement 12 sind an gegenüberliegenden Enden Adapterelemente 4' in Form von Laschen vorgesehen, die unmittelbar mit der Erzeugung des Prüfelementes 12 über das 3D-Druckverfahren erzeugt werden. Mithilfe der Laschen 4' kann der Prüfkörper 12 in eine Zugprüfmaschine eingespannt und dessen mechanisches Verhalten untersucht werden.

Anhand der über den mechanischen Test ermittelten Belastbarkeiten der jeweiligen Teilelemente 2, 11 kann beispielsweise eine konstruktive Änderung der Strukturen 1, 10 in den Teilelementen 2, 11 vorgenommen werden, damit die Strukturen 1, 10 in den Bereichen A, B höheren Belastungen ausgesetzt werden können, ohne dass es zum Bauteilversagen der Strukturen 1, 10 kommt.

Im Folgenden werden einige konkrete Anwendungsbeispiele des erfindungsgemäßen Verfahrens beschrieben:

### 1. 3D-gedruckte Matratze:

Zur Untersuchung einer 3D-gedruckten Matratze, also einer Struktur im Sinne der vorliegenden Erfindung, werden aus deren digitalem Design die am stärksten belasteten Bereiche, z.B. solche die Lendenwirbelsäule unterstützen, verschiedene dreidimensionale Bereiche, z.B. Quader oder Würfel, mit bevorzugt einer dreidimensionalen Innenstruktur wie einer Gerüststruktur oder Federelementen, als Teilelemente selektiert. Aus diesen Teilelementen werden entsprechend dem erfindungsgemäßen Verfahren Prüfelemente erzeugt und zusätzlich mit Adapterelementen versehen, die bevorzugt über das gleiche 3D-Druck-Verfahren erzeugt werden, wie es zur Fertigung der gesamten Matratze verwendet wird. Anschließend werden die Prüfelemente bezüglich Druckverformungsrest, Kompressionsmodul, Schermodul, Dämpfung in dynamischer Kompression und Scherung untersucht. Außerdem werden an diesen Prüfelementen Medienbeständigkeiten (Quellung, Verfärbung) sowie die Veränderung der vorher geprüften mechanischen Eigenschaften nach Lagerung z.B. in Urin, Reinigungsmitteln, Waschmittellaugen geprüft. Die aus den Prüfungen gewonnenen Daten werden in die Materialauswahlvorgaben zurückgeführt und das Design mit diesen Werten erneut durch die Simulationssoftware iterativ optimiert. Bei Bedarf werden neue Prüfelemente aus dem erneut optimieren digitalen Design wie oben beschrieben erzeugt und im vorgegebenen Verfahren wiederum geprüft bis keine signifikante Optimierung zwischen zwei aufeinander folgenden Prüf- und Optimierungs-Schritten mehr erzielt wird.

### 2. 3D-gedruckte Schuhsohle:

Zur Untersuchung einer 3D-gedruckten Schuhsohle, also einer Struktur im Sinne der vorliegenden Erfindung, werden aus deren digitalem Design die am stärksten kompressiv und in Scherung belasteten Bereiche, z.B. an der Ferse, und aus den am stärksten abrasiv belasteten Bereichen, z.B. in der Region des Zehenschutzes, verschiedene dreidimensionale Bereiche, z.B. Quader oder Würfel, mit bevorzugt einer dreidimensionalen Innenstruktur wie einer Gerüststruktur oder Federelementen, als Teilelemente selektiert. Aus diesen Teilelementen werden entsprechend dem erfindungsgemäßen Verfahren Prüfelemente erzeugt und zusätzlich mit Adapterelementen versehen, die bevorzugt über das gleiche 3D-Druck-Verfahren erzeugt werden, wie es zur Fertigung der gesamten Schuhsohle verwendet wird. Anschließend werden die Prüfelemente auf Dämpfung, Abrieb, Weiterreißbeständigkeit, Druckverformungsrest, Schermodul, Dämpfung in dynamischer Kompression und Scherung sowie Härte, Witterungs- und Medienbeständigkeit (Waschbeständigkeit, Ölbeständigkeit) untersucht. Die aus den Prüfungen gewonnenen Daten werden in die Materialauswahlvorgaben zurückgeführt und das Design mit diesen Werten erneut durch die Simulationssoftware iterativ optimiert. Bei Bedarf werden neue Prüfelemente aus dem erneut optimieren digitalen Design wie oben beschrieben erzeugt und im vorgegebenen Verfahren wiederum geprüft bis keine signifikante Optimierung zwischen zwei aufeinander folgenden Prüf- und Optimierungs-Schritten mehr erzielt wird.

### 3. T-Shirt mit Aufdruck:

Es soll ein T-Shirt mit Aufdruck, z.B. mit einem Schriftzug der mittels FDM erzeugt wurde, untersucht werden. Der Schriftzug entspricht hierbei der Struktur im Sinne der vorliegenden Erfindung. Aus dessen dünnsten Bereichen / Buchstaben und damit bezüglich Verschleiß am stärksten belasteten Bereich soll ein Ablösreißtest und Abbrasionstest (Taber) wird eine Untersuchung von Waschbeständigkeit und Ölbeständigkeit bezüglich Verfärbung und Veränderung von mechanischen Eigenschaften analog zu der vorstehend beschriebenen Methode vorgenommen. Die aus den Prüfungen gewonnenen Daten werden in die Materialauswahlvorgaben zurückgeführt und das Design mit diesen Werten erneut durch die Simulationssoftware iterativ optimiert. Bei Bedarf werden neue Prüfelemente aus dem erneut optimieren digitalen Design wie oben beschrieben erzeugt und im vorgegebenen Verfahren wiederum geprüft bis keine signifikante Optimierung zwischen zwei aufeinander folgenden Prüf- und Optimierungs-Schritten mehr erzielt wird.

### 4) Automobil-Strukturelement:

Aus einem Automobil-Strukturelement, also einer Struktur im Sinne der vorliegenden Erfindung, werden aus dessen dreidimensionalem digitalen Design Teilelemente selektiert. Interessante Automobil-Strukturelemente sind beispielsweise Crashstrukturen oder Karosseriebereiche, insbesondere aus der Frontstruktur der Haube, die bevorzugt eine dreidimensionale Innenstruktur, wie einer Gerüststruktur, besitzen. Aus diesen Teilelementen werden entsprechend dem erfindungsgemäßen Verfahren Prüfelemente erzeugt und zusätzlich mit Adapterelementen versehen, die bevorzugt über das gleiche 3D-Druck-Verfahren erzeugt werden, wie es zur Fertigung der Struktur in diesem Bereich verwendet wird. Die Prüfelemente werden anschließend auf Eindruckfestigkeit, Verwindungssteifigkeit, Resonanzfrequenz, Vibrationsermüdung und Crashfestigkeit hin untersucht. Die aus den Prüfungen gewonnenen Daten werden in die Materialauswahlvorgaben zurückgeführt und das Design mit diesen Werten erneut durch die Simulationssoftware iterativ optimiert. Bei Bedarf werden neue Prüfelemente aus dem erneut optimieren digitalen Design wie oben beschrieben erzeugt und im vorgegebenen Verfahren wiederum geprüft bis keine signifikante Optimierung zwischen zwei aufeinander folgenden Prüf- und Optimierungs-Schritten mehr erzielt wird.

### Bezugszeichenliste:

- 1: Struktur
- 2: Teilelement
- 3: Prüfelement
- 3': Prüfelement
- 4: Öse
- 4': Lasche
- 10: Struktur
- 11: Teilelement
- 12: Prüfelement

## Patentansprüche

1. Verfahren zur mechanischen Prüfung einer einteilig ausgebildeten Struktur (1, 10), umfassend die folgenden Schritte:
a) Identifizieren eines Teilelementes (2, 11) in der einteilig ausgebildeten Struktur (1, 10) zur Erzeugung eines Prüfelementes (3, 3') welches wenigstens ;iner mechanischen Prüfung unterzogen werden soll, wobei das Teilelement (2, 11) nur einen Abschnitt der einteilig ausgebildeten Struktur (1, 10) darstellt,
b) Ermittlung der räumlich-geometrischen Struktur des Teilelementes (2, 11),
c) Erzeugung des Prüfelementes (3, 3') anhand der räumlich-geometrischen Struktur des Teilelementes (2, 11) zumindest anteilig oder vollständig über ein 3D-Druckverfahren,
d) Durchführung der wenigstens einen mechanischen Prüfung an dem erzeugten Prüfelement (3,3'),
**dadurch gekennzeichnet, dass** das Identifizieren des Teilelementes (2, 11) in der einteilig ausgebildeten Struktur (1, 10) anhand des Ergebnisses einer Simulationsrechnung erfolgt, die ermittelt, in welchen Bereichen der einteilig ausgebildeten Struktur (1, 10) bei deren bestimmungsgemäßem Gebrauch mit einer überdurchschnittlichen mechanischen Belastung zu rechnen ist.

2. Verfahren nach Anspruch 1, **dadurch gekennzeichnet, dass** an dem Prüfelement (3, 3') wenigstens ein Adapterelement (4, 4') vorgesehen ist, das geeignet ist, mit einer Vorrichtung zur mechanischen Prüfung gekoppelt zu werden.

3. Verfahren nach Anspruch 2, **dadurch gekennzeichnet, dass** das Adapterelement (4, 4') über ein 3D-Druckverfahren erzeugt wird, insbesondere in einem Arbeitsgang mit der Erzeugung des Prüfelementes (3, 3').

4. Verfahren nach Anspruch 2 oder 3, **dadurch gekennzeichnet, dass** das Adapterelement (4, 4') ausgewählt ist aus Fahnen, Ösen, Stiften, Laschen, Zylindern, Greifern, Haltern, Fäden, Netzen, insbesondere aus Formen die mit klassischen mechanischen Prüfmaschinen sicher und messtechnisch sinnvoll verbunden werden können.

5. Verfahren nach einem der Ansprüche 2 bis 4, **dadurch gekennzeichnet, dass** wenigstens zwei Adapterelemente (4, 4') vorgesehen werden.

6. Verfahren nach einem der Ansprüche 2 bis 5, **dadurch gekennzeichnet, dass** die Adapterelemente (4, 4') an den Ansatzstellen der Kraftvektoren positioniert sind, an denen eine insbesondere bauteilversagensrelevante mechanische Belastung der einteilig ausgebildeten Struktur (1, 10) erwartet wird, wobei die bauteilversagensrelevante mechanische Belastung vorzugsweise über eine FEM Last- und Versagenssimulation ermittelt wird.

7. Verfahren nach einem der vorstehenden Ansprüche, **dadurch gekennzeichnet, dass** die einteilig ausgebildete Struktur (1, 10) zumindest anteilig 3D gedruckt ist, wobei das Teilelement (2, 11) vorzugsweise vollständig innerhalb des 3D gedruckten Abschnitts der Struktur (1, 10) liegt.

8. Verfahren nach Anspruch 7, **dadurch gekennzeichnet, dass** das 3D-Druckverfahren zum Drucken des Prüfelements (3, 3') demjenigen entspricht, nach welchem die einteilig ausgebildete Struktur (1, 10) zumindest anteilig gedruckt ist.

9. Verfahren nach einem der vorstehenden Ansprüche, **dadurch gekennzeichnet, dass** die Ermittlung der räumlich-geometrischen Struktur des Teilelementes (2, 11) auf Basis der Konstruktions-Daten, insbesondere der CAD-Daten oder den Ergebnissen einer wenigstens teilweisen Strukturanalyse der einteilig ausgebildeten Struktur (1, 10) erfolgt, insbesondere mittels eines tomographischen schichtabbildenden Verfahrens, insbesondere mittels Elektronen-, Ionen- oder Röntgenanalyse, Nuclear magnetic Resonanzanalyse (NMR), Ultraschallanalyse und/ oder Teraherztechnik.

10. Verfahren nach einem der vorstehenden Ansprüche, **dadurch gekennzeichnet, dass** die mechanische Prüfung an dem Prüfelement (3, 3') ausgewählt ist aus einem Zug-, Druck-, Biege-, Scher-,Reiß- und Schwingungsresonanztest, aus einem Test zur Bestimmung des Elastizitätsmoduls, aus dynamisch mechanischen Tests zur Bestimmung der Materialermüdung, aus Wärme, Oxidations-, Alterungs- und Quellungstests auch in Kombination mit mechanischen und Ermüdungstests, insbesondere bei verschiedenen Temperaturen, oxidativen oder reduktiven Bedingungen, in Gegenwart von Säuren, Basen, organischen und anorganischen Lösungsmitteln, Schmiermitteln, Fetten, Ölen, Treibstoffen und/oder Wasser oder mehreren der vorgenannten Tests.

11. Verfahren nach einem der vorstehenden Ansprüche, **dadurch gekennzeichnet, dass** bei der Erzeugung des Prüfelementes (3, 3') dasselbe Material verwendet wird, wie es demjenigen des Teilelements (2, 11) in der einteilig ausgebildeten Struktur (1, 10) entspricht.

12. Verfahren nach einem der Ansprüche 1 bis 10, **dadurch gekennzeichnet, dass**
a) bei der Erzeugung des Prüfelementes (3, 3') ein anderes Material verwendet wird, als es diesem Teilelement (2, 11) in der einteilig ausgebildeten Struktur (1, 10) entspricht, wobei die Ergebnisse der mechanischen Prüfung an dem Prüfelement (3, 3') über eine Korrekturrechnung auf dasjenige Material übertragen werden, das diesem Teilelement (2, 11) in der einteilig ausgebildeten Struktur (1, 10) entspricht, und/ oder
b) das Prüfelement (3, 3') über eine Größenskalierung in einer anderen Größe erzeugt wird als das Teilelement (2, 11) in der einteilig ausgebildeten Struktur (1, 10), wobei die Ergebnisse der mechanischen Prüfung an dem Prüfelement (3, 3') über eine Korrekturrechnung auf diejenige Größe übertragen werden, die diesem Teilelement (2, 11) in der einteilig ausgebildeten Struktur (1, 10) entspricht.

13. Verfahren nach einem der vorstehenden Ansprüche, **dadurch gekennzeichnet, dass** mehrere Teilelemente (2, 11) in der einteilig ausgebildeten Struktur (1, 10) identifiziert, deren räumlich-geometrische Strukturen ermittelt, hieraus jeweils Prüfelemente (3, 3') erzeugt und diese jeweils wenigstens einer mechanischen Prüfung unterzogen werden.

14. Verfahren zur Modifizierung der Konstruktions-Daten einer einteilig ausgebildeten Struktur (1, 10), bei dem
i) die einteilig ausgebildeten Struktur (1, 10) zunächst einem Verfahren zur mechanischen Prüfung nach einem der Ansprüche 1 bis 13 unterzogen wird,
ii) die Daten der mechanischen Prüfung anschließend zur Modifizierung der Konstruktions-Daten der einteilig ausgebildeten Struktur (1, 10) verwendet werden und
iii) optional auf Basis der modifizierten Konstruktions-Daten eine modifizierte Struktur erzeugt wird,
wobei die Schritte i) bis iii) vorzugsweise wenigstens einmal wiederholt werden.

## Claims

1. Method for the mechanical testing of a structure (1, 10) formed as one part, comprising the following steps:
a) identifying a sub-element (2, 11) in the structure (1, 10) formed as one part for generating a test element (3, 3') that is intended to undergo at least one mechanical test, wherein the sub-element (2, 11) only represents a portion of the structure (1, 10) formed as one part,
b) determining the spatial-geometrical structure of the sub-element (2, 11),
c) generating the test element (3, 3') on the basis of the spatial-geometrical structure of the sub-element (2, 11) at least in part or in full by way of a 3D printing process,
d) carrying out the at least one mechanical test on the test element (3, 3') generated,
**characterized in that** the identification of the sub-element (2, 11) in the structure (1, 10) formed as one part is performed on the basis of the result of a simulation calculation, which determines in which regions of the structure (1, 10) formed as one part above-average mechanical loading is to be expected during its use as intended.

2. Method according to Claim 1, **characterized in that** at least one adapter element (4, 4') that is suitable for being coupled to a device for mechanical testing is provided on the test element (3, 3').

3. Method according to Claim 2, **characterized in that** the adapter element (4, 4') is generated by means of a 3D printing process, in particular in one operation with the generation of the test element (3, 3').

4. Method according to Claim 2 or 3, **characterized in that** the adapter element (4, 4') is selected from lugs, eyelets, pins, butt straps, cylinders, grippers, holders, threads, meshes, in particular from forms that can be connected to classic mechanical testing machines securely and appropriately in terms of measurement.

5. Method according to one of Claims 2 to 4, **characterized in that** at least two adapter elements (4, 4') are provided.

6. Method according to one of Claims 2 to 5, **characterized in that** the adapter elements (4, 4') are positioned at the points of application of the force vectors at which in particular mechanical loading relevant to component failure on the structure (1, 10) formed as one part is expected, the mechanical loading relevant to component failure preferably being determined by means of an FEM load and failure simulation.

7. Method according to one of the preceding claims, **characterized in that** the structure (1, 10) formed as one part is at least partly 3D-printed, the sub-element (2, 11) preferably lying completely within the 3D-printed portion of the structure (1, 10).

8. Method according to Claim 7, **characterized in that** the 3D printing process for printing the test element (3, 3') corresponds to that by which the structure (1, 10) formed as one part is at least partly printed.

9. Method according to one of the preceding claims, **characterized in that** the determination of the spatial-geometrical structure of the sub- element (2, 11) is performed on the basis of the structural design data, in particular the CAD data or the results of an at least partial structural analysis of the structure (1, 10) formed as one part, in particular by means of a tomographic layer-imaging process, in particular by means of electron, ion or x-ray analysis, nuclear magnetic resonance analysis (NMR), ultrasonic analysis and/or tetrahertz techniques.

10. Method according to one of the preceding claims, **characterized in that** the mechanical testing on the test element (3, 3') is selected from a tensile, compressive, flexural, shearing, tearing and vibration resonance test, from a test for determining the modulus of elasticity, from dynamic mechanical tests for determining the material fatigue, from thermal, oxidation, aging and swelling tests also in combination with mechanical and fatigue tests, in particular under various temperatures, oxidative or reductive conditions, in the presence of acids, alkalis, organic and inorganic solvents, lubricants, greases, oils, fuels and/or water or a number of the aforementioned tests.

11. Method according to one of the preceding claims, **characterized in that** the same material as corresponds to that of the sub-element (2, 11) in the structure (1, 10) formed as one part is used in the generation of the test element (3, 3').

12. Method according to one of Claims 1 to 10, **characterized in that**
a) a different material is used in the generation of the test element (3, 3') than corresponds to this sub-element (2, 11) in the structure (1, 10) formed as one part, the results of the mechanical testing on the test element (3, 3') being transferred to the material that corresponds to this sub-element (2, 11) in the structure (1, 10) formed as one part by means of a corrective calculation, and/or
b) the test element (3, 3') is generated in a different size than the sub-element (2, 11) in the structure (1, 10) formed as one part by means of a size scaling, the results of the mechanical testing on the test element (3, 3') being transferred to the size that corresponds to this sub-element (2, 11) in the structure (1, 10) formed as one part by means of a corrective calculation.

13. Method according to one of the preceding claims, **characterized in that** a number of sub-elements (2, 11) in the structure (1, 10) formed as one part are identified, their spatial-geometrical structures determined and used in each case for generating test elements (3, 3'), which are respectively made to undergo at least one mechanical test.

14. Method for modifying the structural design data of a structure (1, 10) formed as one part, in which
i) the structure (1, 10) formed as one part is first made to undergo a method for mechanical testing according to one of Claims 1 to 13,
ii) the data of the mechanical testing are subsequently used for modifying the structural design data of the structure (1, 10) formed as one part and
iii) optionally, a modified structure is generated on the basis of the modified structural design data, steps i) to iii) preferably being repeated at least once.

## Revendications

1. Procédé d'essai mécanique d'une structure réalisée d'un seul tenant (1, 10), comprenant les étapes suivantes consistant à :
a) identifier un élément partiel (2, 11) dans la structure réalisée d'un seul tenant (1, 10) pour générer un élément d'essai (3, 3') qui doit être soumis à au moins un essai mécanique, l'élément partiel (2, 11) ne représentant qu'une partie de la structure réalisée d'un seul tenant (1, 10),
b) déterminer la structure spatio-géométrique de l'élément partiel (2, 11),
c) générer l'élément d'essai (3, 3') à l'aide de la structure spatio-géométrique de l'élément partiel (2, 11) au moins en partie ou complètement par le biais d'un procédé d'impression 3D,
d) effectuer ledit au moins un essai mécanique sur l'élément d'essai (3, 3') généré,
**caractérisé en ce que** l'identification de l'élément partiel (2, 11) dans la structure réalisée d'un seul tenant (1, 10) est effectuée à l'aide du résultat d'un calcul de simulation qui détermine dans quelles zones de la structure réalisée d'un seul tenant (1, 10) il faut s'attendre à une contrainte mécanique exceptionnelle lorsque celle-ci est utilisée correctement.

2. Procédé selon la revendication 1, **caractérisé en ce que** sur l'élément d'essai (3, 3') est prévu au moins un élément d'adaptation (4, 4') qui est apte à être couplé à un dispositif d'essai mécanique.

3. Procédé selon la revendication 2, **caractérisé en ce que** l'élément d'adaptation (4, 4') est généré par un procédé d'impression 3D, en particulier dans une opération comprenant la génération de l'élément d'essai (3, 3').

4. Procédé selon la revendication 2 ou 3, **caractérisé en ce que** l'élément d'adaptation (4, 4') est sélectionné parmi des pattes, des œillets, des broches, des attaches, des cylindres, des griffes, des consoles, des fils, des filets, en particulier parmi des formes qui peuvent être reliées de manière sûre et métrologiquement utile à des machines d'essai mécanique conventionnelles.

5. Procédé selon l'une quelconque des revendications 2 à 4, **caractérisé en ce qu'**au moins deux éléments d'adaptation (4, 4') sont prévus.

6. Procédé selon l'une quelconque des revendications 2 à 5, **caractérisé en ce que** les éléments d'adaptation (4, 4') sont positionnés aux points d'attaque des vecteurs de force où est attendue une contrainte mécanique, en particulier liée à la défaillance d'un composant, de la structure réalisée d'un seul tenant (1, 10), la contrainte mécanique liée à la défaillance d'un composant étant de préférence déterminée par une simulation de charge et de défaillance FEM.

7. Procédé selon l'une quelconque des revendications précédentes, **caractérisé en ce que** la structure réalisée d'un seul tenant (1, 10) est imprimée en 3D au moins en partie, l'élément partiel (2, 11) se trouvant de préférence complètement à l'intérieur de la partie imprimée 3D de la structure (1, 10).

8. Procédé selon la revendication 7, **caractérisé en ce que** le procédé d'impression 3D pour imprimer l'élément d'essai (3, 3') correspond à celui selon lequel la structure réalisée d'un seul tenant (1, 10) est imprimée au moins en partie.

9. Procédé selon l'une quelconque des revendications précédentes, **caractérisé en ce que** la détermination de la structure spatio-géométrique de l'élément partiel (2, 11) est effectuée sur la base des données de construction, en particulier des données de CAO ou des résultats d'une analyse structurelle au moins partielle de la structure réalisée d'un seul tenant (1, 10), en particulier au moyen d'un procédé tomographique à formation de couches, en particulier au moyen d'une analyse d'électrons, d'ions ou de rayons X, d'une analyse par résonance magnétique nucléaire (NMR), d'une analyse par ultrason et/ou d'une technique térahertz.

10. Procédé selon l'une quelconque des revendications précédentes, **caractérisé en ce que** l'essai mécanique sur l'élément d'essai (3, 3') est sélectionné parmi un test de traction, de compression, de flexion, de cisaillement, de rupture et de résonance d'oscillation, un test pour déterminer le module d'élasticité, des tests mécano-dynamiques pour déterminer la fatigue de la matière, des tests thermiques, d'oxydation, de vieillissement et de gonflement, également en combinaison avec des tests mécaniques et de fatigue, en particulier à différentes températures, sous différentes conditions d'oxydation ou de réduction, en présence d'acides, de bases, de solvants organiques et inorganiques, de lubrifiants, de graisses, d'huiles, de carburants et/ou d'eau ou plusieurs desdits tests.

11. Procédé selon l'une quelconque des revendications précédentes, **caractérisé en ce que** lors de la production de l'élément d'essai (3, 3'), le même matériau est utilisé que celui qui correspond à l'élément partiel (2, 11) dans la structure réalisée d'un seul tenant (1, 10).

12. Procédé selon l'une quelconque des revendications 1 à 10, **caractérisé en ce que**
a) lorsque l'élément d'essai (3, 3') est généré, un matériau différent est utilisé que celui qui correspond à cet élément partiel (2, 11) dans la structure réalisée d'un seul tenant (1, 10), les résultats de l'essai mécanique sur l'élément d'essai (3, 3') étant transposés par un calcul de correction au matériau qui correspond à cet élément partiel (2, 11) dans la structure réalisée d'un seul tenant (1, 10), et/ ou
b) l'élément d'essai (3, 3') est généré par une mise à l'échelle de la dimension dans une autre dimension que l'élément partiel (2, 11) dans la structure réalisée d'un seul tenant (1, 10), les résultats de l'essai mécanique sur l'élément d'essai (3, 3') étant transposés par un calcul de correction à la dimension qui correspond à cet élément partiel (2, 11) dans la structure réalisée d'un seul tenant (1, 10) .

13. Procédé selon l'une quelconque des revendications précédentes, **caractérisé en ce que** plusieurs éléments partiels (2, 11) sont identifiés dans la structure réalisée d'un seul tenant (1, 10), leurs structures spatio-géométriques sont déterminées, des éléments d'essai (3, 3') sont respectivement générés à partir de celles-ci, et celles-ci sont soumises à au moins un essai mécanique, respectivement.

14. Procédé de modification des données de construction d'une structure réalisée d'un seul tenant (1, 10), dans lequel
i) la structure réalisée d'un seul tenant (1, 10) est d'abord soumise à un procédé d'essai mécanique selon l'une quelconque des revendications 1 à 13,
ii) ensuite, les données de l'essai mécanique sont utilisées pour modifier les données de construction de la structure réalisée d'un seul tenant (1, 10), et
iii) en option, une structure modifiée est générée sur la base des données de construction modifiées,
les étapes i) à iii) étant répétées de préférence au moins une fois.
